# EUROPEAN PATENT SPECIFICATION

(11) **EP 0 821 867 B1**
(45) Date of publication and mention of the grant of the patent: **05.12.2001**
(21) Application number: 97305739.1
(22) Date of filing: 30.07.1997
(51) Int. Cl.: A01D 34/71

(54) **Lawnmower with grass collector**
Rasenmäher mit Gras-Auffangbox
Tondeuse à gazon avec réceptacle de ramassage

(30) Priority: 30.07.1996 GB 9615918
(43) Date of publication of application: 04.02.1998
(73) Proprietor: ELECTROLUX OUTDOOR PRODUCTS LIMITED, Newton Aycliffe, Co Durham DL5 6UP (GB)
(72) Inventor: Park, Keith, Ellerton, York, Yorkshire Y04 4NX (GB); Roberts, Nigel James, Bedale, North Yorkshire DL8 2UA (GB)
(74) Representative: Wright, Howard Hugh Burnby

(56) References cited:
- EP-A- 0 364 913
- EP-A- 0 481 655
- EP-A- 0 544 211
- DE-U- 9 213 533
- US-A- 5 020 309

## Description

The present invention relates to a lawnmower, and in particular to a lawnmower of the type which collects grass cut by the lawnmower.

In all types of lawnmower which collect the grass which has been cut, it is necessary for the grass box or bag to be emptied regularly, since this normally fills up with grass very quickly, particularly where the grass collection system is very effective. Regularly emptying the grass box is very inconvenient, particularly where the grass box requires to be carried some distance to where it is to be emptied. It will be apparent, to any person skilled in the art, that the grass collected within a grass box is loosely packed and springy, since the grass box contains a large proportion of air. The greater the proportion of air within the collected grass cuttings, the more often the grass box must be emptied.

It is also apparent to any skilled person in the art that, when cutting grass using a rotary type lawnmower, some grass is impacted against the inside of the chassis or blade guard of the mower, in the form of a mulch. This mulch is very dense since air has been removed from it. This mulching of grass occurs both on rotary mowers supported on wheels, and those supported on a cushion of air.

US 5020309 discloses a shredder attachment for use with lawnmowers having vacuum or fan movement of grass cuttings. The attachment comprises a frame suitably sized and shaped to be substantially mounted inside the grass discharge conduit of the lawnmower. The attachment includes a rotary cutter for cutting material passing through the conduit and a motor for driving the cutter.

The aim of the invention is to provide an improved lawnmower.

According to the present invention, a lawnmower comprises a chassis, a motor supported by the chassis, a cutter blade drivable by the motor to cut grass, a grass collection receptacle carried by the chassis, and a mulching member characterised in that the mulching member is arranged to operate on grass cuttings within the grass collection receptacle to reduce the size of the grass cuttings.

Such a lawnmower reduces the size of cut grass, thereby improving compaction of cut grass within the grass box. Some of the reduced grass forms a mulch as a result of being impacted by the mulching member. The grass collection receptacle is, therefore, able to receive a much greater amount of cut grass, thereby reducing the frequency with which an operator must empty it.

The mulching member may comprise a flexible cutting line rotatable about an axis. This gives a great advantage where the flexible cutting line is carried from the chassis and projects through a hole in the base of the grass collection receptacle. When the grass collection receptacle is removed by lifting it from the chassis, the flexible cutting line is pulled through the hole in the base of the grass collection receptacle. If the cutting line were rigid, the hole would have to be much larger, and some of the collected grass might then drop out.

Alternatively, the mulching member comprises a rigid blade rotatable about an axis. Such a rigid blade would have a longer life than the flexible cutting line, but would be mounted in a different manner to the flexible cutting line.

Preferably, the mulching member is driven by the motor, and may be driven directly from a shaft of the motor. Alternatively, it may be driven by the motor via a drive line. The direct drive is simple in design, whereas the drive line arrangement, whilst being more complex, permits the cutter blade and the mulching member to be driven at different angular velocities.

Preferably, the mulching member is mounted within the grass collection receptacle. In this case, if the mulching member is a rigid blade, the blade maybe so configured as to suck air and cut grass into the grass collection receptacle.

According to one embodiment, the grass collection receptacle includes an apertured wall through which the mulching member extends when the grass collection receptacle is supported on the chassis. As outlined above, the grass collection receptacle can be removed leaving the mulching member carried on the chassis.

Where the mulching is particularly effective, some water and chlorophyll may be released, and so the grass collection receptacle might include a drain for releasing any liquid from the resultant mulch.

Preferably, the lawnmower further comprises a suction fan for sucking air into the grass collection receptacle via a grass collection inlet. This has been found to be particularly effective. Preferably, the lawnmower includes an exhaust air outlet for directing air directly to atmosphere from the suction fan. Alternatively, the suction fan includes an exhaust air outlet for directing air beneath the chassis. This might enable the mower to be supported upon a cushion of pressurised air generated by the suction fan.

Embodiments of the present invention will now be described, by way of example, with reference to the accompanying drawings, in which:
Figure 1 is a longitudinal sectional view of a first form of lawnmower including a flexible cutting line rotatable within the grass box; and
Figure 2 shows a second form of lawnmower in which the mulching member operates on grass as it enters the grass box.

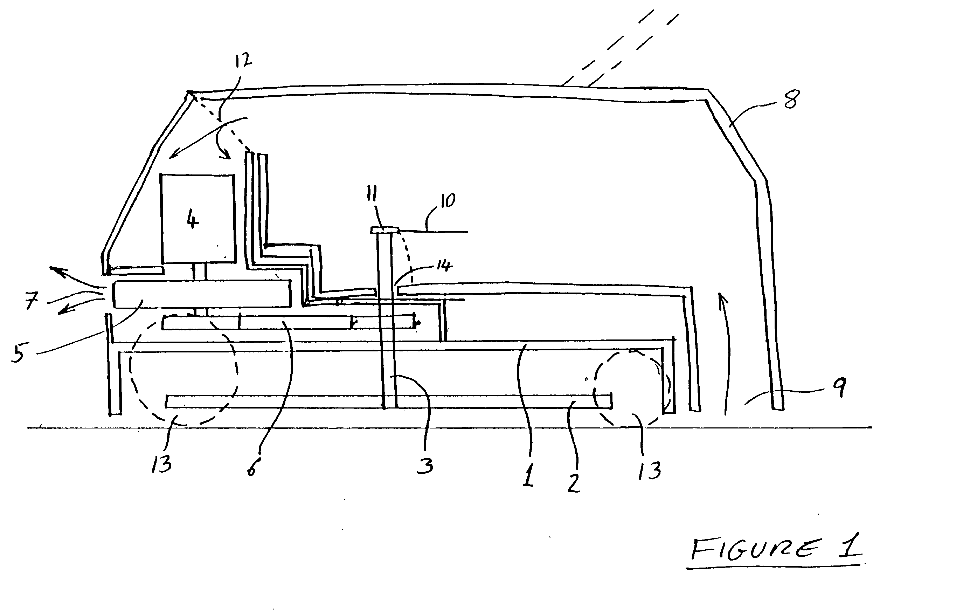

Referring to the drawings, Figure 1 shows a lawnmower having a chassis 1 within which a grass cutter blade 2 rotates. The chassis 1 forms a blade guard for protecting an operator from the cutter blade 2.

The cutter blade 2 is mounted on a blade shaft 3 through which drive is transmitted to the cutter blade 2. A motor 4 is carried by the chassis 1 for driving the cutter blade 2. The motor 4 is mounted at the front of the chassis 1 (considered in the normal direction of movement of the lawnmower), and drives an impeller 5 mounted directly on an output shaft of the motor. A drive line 6 transmits drive from the output shaft of the motor 4 to the blade shaft 3. The drive line 6 includes a drive pulley mounted on the output shaft of the motor 4, a driven pulley mounted on the blade shaft 3, and a drive belt disposed therebetween.

The impeller 5 is mounted within a housing including an exhaust outlet 7 through which air is exhausted from the impeller directly to atmosphere. The impeller 5 acts as a suction fan.

A grass box 8 is mounted on the chassis 1, and is of a large size since the motor 4 is displaced to the front of the lawnmower. The grass box 8 includes an inlet 9 through which cut grass is sucked into the grass box. Collection is facilitated by the impeller 5 which sucks air from the grass box 8, thereby inducing a considerable flow of air through the grass box inlet 9. The grass box inlet 9 is disposed just above the ground behind the chassis 1, so that grass which has been cut by the cutter blade 2 and has been left on the ground is sucked into the grass box 8 via the inlet 9. A filter 12 is disposed at the outlet of the grass box 8, so that dust and cut grass cannot pass through the impeller 5.

Towards the centre of the grass box 8, an aperture 14 is located in the floor of the grass box 8. A mulching post 11 extends through the aperture 14 into the body of the grass box 8. Attached to the mulching post 11 is a mulching member 10 which is a flexible cutting line. The flexible cutting line 10 is made of a nylon cord of a similar type to that found commonly in garden trimmers.

The chassis 1 is supported above the ground by wheels 13.

In operation, the motor 4 drives the impeller 5 so as to suck air from the grass box inlet 9 in the region of the ground behind the chassis 1 through the grass box 8, through the filter 12, and past the motor 4 so that the motor is cooled by the airflow before entering the impeller 5. The air is then exhausted through the exhaust outlet 7. The motor 4 also transmits drive through the drive line 6 to the blade shaft 3. The cutter blade 2 is, therefore, driven so that it rotates about a vertical axis to cut grass by a scything action. The cut grass is dropped on the ground; and, as the lawnmower is pushed forwards, the cut grass is left behind on the ground so that it may be picked up from the region of the grass box inlet 9.

The blade shaft 3 also drives the mulching post 11 to rotate about a vertical axis, and this causes the cutting line 10 to rotate like a flail, cutting any collected grass into smaller pieces. This cutting line 10 not only reduces the size of collected grass, but also causes a proportion of the collected grass to be mulched into a pulp. Any collected grass coming into contact with the cutting line 10 is flung towards the sides of the grass box 8 so as not to clog the cutting line and also to keep collected grass away from the aperture 14.

When the grass box 8 requires emptying, the motor 4 must be switched off in order to stop the rotation of the flexible cutting line 10, which then drops to the position shown by a dotted line in Figure 1. The grass box 8 may then be lifted vertically from the chassis 1, whereby the mulching post 11 passes through the aperture 14. When the grass box 8 is to be replaced on the chassis 1, the aperture 14 must again be passed over the mulching post 11.

Alternatively, the mulching member 10 may be a rigid cutter, in which case it would have to be drivingly connected to the blade shaft 3 in a different manner.

The mounting of the impeller 5 so that air is exhausted via the exhaust outlet 7 directly to atmosphere has the advantage that substantially all of the work done by the impeller 5 is in sucking air through the grass box 8; whereas, if the air is directed downwardly beneath the chassis 1, the impeller must also overcome some resistance to the airflow as it escapes from beneath the chassis.

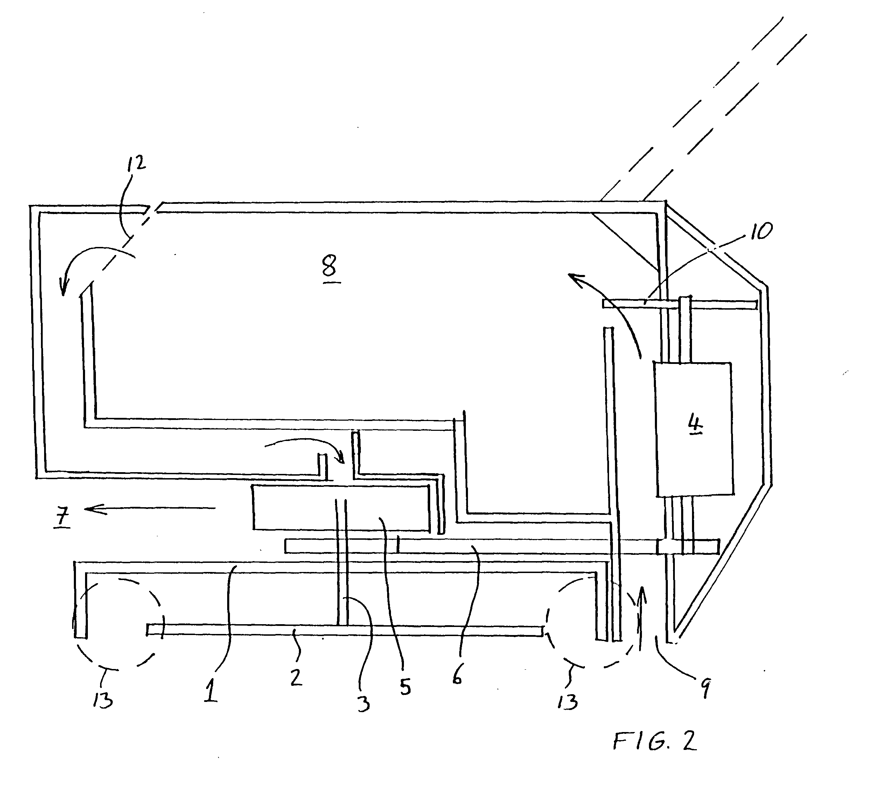

Figure 2 shows a second form of lawnmower which is similar to the lawnmower of Figure 1. Consequently, like reference numerals will be used for like parts, and only the modifications will be described in detail. Thus, the motor 4 of this embodiment is disposed towards the rear of the machine, and drives a motor shaft 4a which extends from both its ends. The part of the motor shaft 4a which extends from the lower end of the motor 4 drives the drive line 6 which transmits power to the blade shaft 3.

In this embodiment, the mulching member 10 is positioned in the path of cut grass entering the grass box 8. The mulching member 10 is a rotary blade driven by the motor 4 via that part of the motor shaft 4a extending from the top of the motor 4. Part of the arc of rotation of the mulching member 10 is in the path of cut grass entering the grass box 8.

In use, the motor 4 is switched on, and drives the cutter blade 2 and the impeller 5 via the drive line 6 and the blade shaft 3. The cutter blade 2 cuts grass, and the impeller 5 sucks air from the grass box 8 and exhausts air through an exhaust outlet 7 directly to atmosphere. The impeller 5 sucks air into the grass box 8 through the grass box inlet 9. As the lawnmower is pushed forwards, cut grass is deposited on the ground by the cutter blade 2, and is then sucked into the grass box 8 via the grass box inlet 9. The air sucked by the impeller 5 is drawn through the filter 12 before passing through the impeller 5. The collected grass is thus deposited within the grass box 8. The mulching member 10 is also driven by the motor 4, and rotates very quickly in the path of grass entering the grass box 8. The mulching member 10 serves to reduce the size of cut grass entering the grass box 8, and flings the cut grass right inside the grass box 8. The mulching member 10 may also cause the collected grass to be mulched or pulped, so as to remove much of the air disposed therein. This assists in creating a denser compaction of cut grass within the grass box 8. Much more grass can then be collected before the grass box 8 requires emptying. The mulching member 10 may cause water and chlorophyll to be separated from the grass, in which case a drain hole (not shown) may be included in the floor of the grass box 8.

The drive line 6 includes pulleys of different sizes so that a gearing effect is built into the drive line. The reason for this is that the cutter blade 2 needs to rotate at a lower angular velocity than the mulching member 10. Typically, the cutter blade 2 rotates at only 4,000 rpm in order to cut grass. If the blade rotates much faster than this, the cutter blade 2 itself will also mulch the grass against the underside of the chassis 1. It is preferred that the mulching member 10 rotate much faster than this, at about 16,000 rpm, in order to have as great a mulching effect on the cut grass entering the grass box 8 as possible.

The grass box 8 is preferably mounted above the chassis 1 in order to maintain stability. When the grass box becomes full, the centre of gravity will be relatively high. It is, therefore, advantageous to place the grass 8 box directly above the chassis 1.

Many modifications may be made to the embodiments described without departing from the invention. Thus, the impeller 5 may be arranged to exhaust air beneath the chassis 1. This will assist in directing any dust entrained in the air towards the ground, rather than spraying it into the air. If this exhausted air is directed beneath the chassis 1, it may be possible to dispense with the wheels and support the mower above the ground by means of a cushion of air.

Different grass collection systems might be used instead of the one described in the embodiments described in connection with Figures 1 and 2. For example, in a wheeled rotary mower, cut grass may be directed into the grass collection box via a chute leading from within the chassis 1. The cutter blade 2 may include upturned tips which, in use, serve to direct cut grass through the chute into the grass box 8. The impeller 5 might then be dispensed with altogether. In any collection system where no airflow is used to collect the cut grass, the mulched cut grass might be collected in a plastic bag within the grass box 8.

This invention applies not only to rotary lawnmowers, but also to cylinder type lawnmowers in which collected cut grass is reduced by a mulching member.

In another embodiment, the cut grass may pass through two or more mulching members arranged in series. In such a case, the mulching is improved by more than one mulching process carried out on it. According to another embodiment, the mulching member acts not only to mulch the grass entering the grass box, but also to suck grass into the grass box, in which case the mulching member may be shaped like a fan blade. In this case, the impeller may be omitted, thereby increasing the available space above the chassis for the grass box.

## Claims

1. A lawnmower comprising:
a chassis (1),
a motor (4) supported by the chassis (1),
a cutter blade (2) drivable by the motor (4) to cut grass,
a grass collection receptacle (8) carried by the chassis (1); and
a mulching member (10)
**characterised in that** the mulching member is arranged to operate on grass cuttings within the grass collection receptacle (8) to reduce the size of the grass cuttings.

2. A lawnmower according to claim 1, wherein the mulching member comprises a flexible cutting line (10) rotatable about an axis.

3. A lawnmower according to claim 1, wherein the mulching member comprises a rigid blade (10) rotatable about an axis.

4. A lawnmower according to any one of the preceding claims, wherein the mulching member (10) is driven by the motor (4).

5. A lawnmower according to claim 4, wherein the mulching member (10) is driven directly from a drive shaft of the motor (4).

6. A lawnmower according to claim 4, wherein the mulching member (10) is driven by the motor (4) via a drive line (6).

7. A lawnmower according to any one of claims 1 to 6, wherein the mulching member (10) is arranged to operate on cut grass in the region of the inlet to the grass collection receptacle (8).

8. A lawnmower as claimed in claim 7 when appendant to claim 3, wherein the blade (2) is configured so as to suck air and cut grass into the grass collection receptacle (8).

9. A lawnmower according to claim 7 or claim 8, wherein the grass collection receptacle (8) includes an apertured wall through which the mulching member (10, 11) extends when the grass collection receptacle (8) is disposed on the chassis (1).

10. A lawnmower according to any one of claims 1 to 9, wherein the grass collection receptacle (8) includes a drain for releasing liquid from any resultant mulch.

11. A lawnmower according to any one of claims 1 to 10, further comprising a suction fan (5) for sucking air into the grass collection receptacle (8) via a grass collection inlet (9).

12. A lawnmower according to claim 11, wherein the suction fan (5) includes an exhaust air outlet (7) for directing air directly to atmosphere.

13. A lawnmower according to claim 11, wherein the suction fan (5) includes an exhaust air outlet for directing air beneath the chassis.

## Patentansprüche

1. Rasenmäher mit:
einem Chassis (1),
einem Motor (4), der durch das Chassis (1) gelagert ist,
einer Schneidklinge (2), die durch den Motor (4) zum Schneiden von Gras antreibbar ist,
einem Grassammelbehälter (8), der von dem Chassis (1) gehalten ist, und mit
einem Mulchteil (10),
**dadurch gekennzeichnet, dass** das Mulchteil für das Einwirken auf Grasschnitte innerhalb des Grasssammelbehälters (8) zur Verringerung der Grasschnittgröße vorgesehen ist.

2. Rasenmäher nach Anspruch 1, bei dem das Mulchteil ein flexibles Schneidkabel (10) aufweist, das um eine Achse drehbar ist.

3. Rasenmäher nach Anspruch 1, **dadurch gekennzeichnet, dass** das Mulchteil eine starre Klinge (10) aufweist, die um eine Achse drehbar ist.

4. Rasenmäher nach einem der vorangehenden Ansprüche, bei dem das Mulchteil (10) durch den Motor (4) angetrieben ist.

5. Rasenmäher nach Anspruch 4, bei dem das Mulchteil (10) unmittelbar von einer Antriebswelle des Motors (4) angetrieben ist.

6. Rasenmäher nach Anspruch 4, bei dem das Mulchteil (10) durch den Motor (4) über eine Transmission (6) angetrieben ist.

7. Rasenmäher nach einem der Ansprüche 1 bis 6, bei dem das Mulchteil (10) für das Bearbeiten von geschnittenem Gras im Bereich des Einlasses des Grassammelbehälters (8) angeordnet ist.

8. Rasenmäher nach Anspruch 7 in Abhängigkeit von Anspruch 3, bei dem die Klinge (2) derart konfiguriert ist, dass sie Luft und Gras in den Grassammelbehälter (8) saugt.

9. Rasenmäher nach Anspruch 7 oder 8, bei dem der Grassammelbehälter (8) eine geöffnete Wand aufweist, durch die das Mulchteil (10, 11) sich erstreckt, wenn der Grassammelbehälter (8) auf dem Chassis (1) angeordnet ist.

10. Rasenmäher nach einem der Ansprüche 1 bis 9, bei dem der Grassammelbehälter (8) einen Ablauf zum Abgeben von Flüssigkeit aus irgendeinem resultierenden Mulch aufweist.

11. Rasenmäher nach einem der Ansprüche 1 bis 10, weiterhin mit einem Sauggebläse (5) zum Einsaugen von Luft in den Grassammelbehälter (8) über einen Grassammeleinlass (9).

12. Rasenmäher nach Anspruch 11, bei dem das Sauggebläse (5) einen Abluftauslass (7) zum Richten von Luft unmittelbar zur Atmosphäre aufweist.

13. Rasenmäher nach Anspruch 11, bei dem das Sauggebläse (5) einen Abluftauslass (7) zum Richten von Luft unterhalb des Chassis aufweist.

## Revendications

1. Tondeuse à gazon comprenant :
un châssis (1),
un moteur (4) supporté par le châssis (1),
une lame de coupe (2) qui peut être entraînée par le moteur (4) pour couper l'herbe,
un réceptacle de collecte d'herbe (8) porté par le châssis (1), et
un élément de dilacération (10),
**caractérisée en ce que** l'élément de dilacération est agencé de manière à agir sur l'herbe coupée, à l'intérieur du réceptacle de collecte d'herbe (8), afin de réduire la dimension des brins d'herbe coupés.

2. Tondeuse à gazon selon la revendication 1, dans laquelle l'élément de dilacération comprend un fil de coupe souple (10) pouvant tourner autour d'un axe.

3. Tondeuse à gazon selon la revendication 1, dans laquelle l'élément de dilacération comprend une lame rigide (10) pouvant tourner autour d'un axe.

4. Tondeuse à gazon selon une quelconque des revendications précédentes, dans laquelle l'élément de dilacération (10) est entraîné par le moteur (4).

5. Tondeuse à gazon selon la revendication 4, dans laquelle l'élément de dilacération (10) est entraîné directement par un arbre d'entraînement du moteur (4).

6. Tondeuse à gazon selon la revendication 4, dans laquelle l'élément de dilacération (10) est entraîné par le moteur (4) par l'intermédiaire d'une transmission (6).

7. Tondeuse à gazon selon une quelconque des revendications 1 à 6, dans laquelle l'élément de dilacération (10) est agencé de manière à agir sur l'herbe coupée, dans la région de l'entrée au réceptacle de collecte d'herbe (8).

8. Tondeuse à gazon selon la revendication 7 lorsqu'elle dépend de la revendication 3, dans laquelle la lame (2) est configurée de manière à aspirer l'air et l'herbe coupée et à les diriger vers le réceptacle de collecte d'herbe (8).

9. Tondeuse à gazon selon la revendication 7 ou la revendication 8, dans laquelle le réceptacle d'herbe (8) comporte une paroi avec un trou à travers lequel passe l'élément de dilacération (10, 11) lorsque le réceptacle de collecte d'herbe (8) est disposé sur le châssis (1).

10. Tondeuse à gazon selon une quelconque des revendications 1 à 9, dans laquelle le réceptacle de collecte d'herbe (8) comprend un drain pour l'évacuation du liquide provenant de l'herbe hachée résultante.

11. Tondeuse à gazon selon une quelconque des revendications 1 à 10, comprenant en outre un ventilateur aspirant (5) pour aspirer de l'air et le refouler dans le réceptacle de collecte d'herbe (8) via une entrée de collecte d'herbe (9).

12. Tondeuse à gazon selon la revendication 11, dans lequel le ventilateur aspirant (5) comporte une sortie d'air d'évacuation (7) pour envoyer l'air directement à l'atmosphère.

13. Tondeuse à gazon selon la revendication 11, dans laquelle le ventilateur aspirant (5) comporte une sortie d'air d'évacuation pour diriger l'air sous le châssis.
